# EUROPEAN PATENT SPECIFICATION

(11) **EP 1 381 921 B1**
(45) Date of publication and mention of the grant of the patent: **11.01.2012**
(21) Application number: 01274015.5
(22) Date of filing: 21.03.2001
(51) Int. Cl.: G05B 13/02, E21B 43/00

(54) **FIELD/RESERVOIR OPTIMIZATION UTILIZING NEURAL NETWORKS**
FELD-/RESERVOIROPTIMIERUNG MIT NEURONALEN NETZEN
OPTIMISATION D'UN CHAMP/GISEMENT AU MOYEN DE RESEAUX NEURONAUX

(43) Date of publication of application: 21.01.2004
(73) Proprietor: HALLIBURTON ENERGY SERVICES, INC., Carrollton, TX 75006 (US)
(72) Inventor: STORM, Bruce, H., Jr., Houston, TX 77077 (US); SCHULTZ, Roger, L., Aubrey, TX 76227 (US); DENNIS, John, R., Bozeman, MT 59715 (US); RICHARDSON, John, M., Norman, OK 73071 (US)
(74) Representative: Curtis, Philip Anthony
(86) International application number: PCT/US2001/009454
(87) International publication number: WO 2002/077728

(56) References cited:
- EP-A- 0 881 357
- US-A- 5 444 619
- US-A- 6 012 015
- US-A- 6 021 377
- US-A- 6 101 447
- WONG P M ET AL: "AN IMPROVED TECHNIQUE IN POROSITY PREDICTION: A NEURAL NETWORK APPROACH" IEEE TRANSACTIONS ON GEOSCIENCE AND REMOTE SENSING, IEEE INC. NEW YORK, US, vol. 33, no. 4, 1 July 1995 (1995-07-01), pages 971-980, XP002066734 ISSN: 0196-2892
- TSAI W-Y ET AL: "AN ART2-BP NEURAL NET AND ITS APPLICATION TO RESERVOIR ENGINEERING" INTERNATIONAL CONFERENCE ON NEURAL NETWORKS/ WORLD CONGRESS ON COMPUTATIONAL INTELLIGENCE. ORLANDO, JUNE 27 - 29, 1994, PROCEEDINGS OF THE INTERNATIONAL CONFERENCE ON NEURAL NETWORKS (ICNN), NEW YORK, IEEE, US, vol. 5, 27 June 1994 (1994-06-27), pages 3289-3294, XP000532717 ISBN: 0-7803-1902-8

## Description

### TECHNICAL FIELD

The present invention relates generally to methods of optimizing the performance of subterranean wells and, in an embodiment described herein, more particularly provides a method of optimizing fields, reservoirs and/or individual wells utilizing neural networks.

### BACKGROUND

Production of hydrocarbons from a field or reservoir is dependent upon a wide variety of influencing parameters. In addition, a rate of production from a particular reservoir or zone is typically limited by the prospect of damage to the reservoir or zone, water coning, etc., which may diminish the total volume of hydrocarbons recoverable from the reservoir or zone. Thus, the rate of production should be regulated so that an acceptable return on investment is received while enhancing the ultimate volume of hydrocarbons recovered from the reservoir or zone.

The rate of production from a reservoir or zone is only one of many parameters which may affect the performance of a well system. Furthermore, if one of these parameters is changed, another parameter may be affected, so that it is quite difficult to predict how a change in a parameter will ultimately affect the well system performance.

It would be very advantageous to provide a method whereby an operator of a well system could conveniently predict how the well system's performance would respond to changes in various parameters influencing the well system's performance. Furthermore, it would be very advantageous for the operator to be able to conveniently determine specific values for the influencing parameters which would optimise the economic value of the reservoir or field.

Yang et al. ("A neural network approach to predict existing and infill oil well performance", Neural Networks (2000), Proceedings of the IEEE-INNS-ENNS International Joint Conference of 24th to 27th July 2000, pages 408 to 413) disclose a neural network approach to predict existing and infill oil well performance. Multiple wells' history production data were used to train the neural network and the established neural network can be used to predict future performance of oil wells. No reservoir data was involved in the establishment of the neural network, therefore it can predict well production performance in absence of reservoir data. As static and dynamic data were used in the training, spatial and time series prediction were combined in this approach. Primary production of a 9-well area in North Robertson Unit in West Texas was tested in the disclosure. The results demonstrated that the approach allowed for rapid projection of existing wells' future performance, as well as performance prediction of infill drilling wells. By incorporation the appropriate optimisation technique, it can be further extended to use for location optimisation of infill drilling wells.

Thomas et al. (WO01/06091) disclose a system and method for real time field wide reservoir management comprising the steps of processing collected field wide reservoir data in accordance with one or more predetermined algorithms to obtain a resultant desired field wide production/injection forecast, generating a signal to one or more individual well control devices instructing the device to increase or decrease flow through the well control device, transmitting the signal to the individual well control device, opening or closing the well control device in response to the signal to increase or decrease the production for one or more selected wells on a real time time basis. The system for field wide reservoir management comprising a CPU for processing collected field wide reservoir data, generating a resultant desired field wide production/injection forecast and calculating a target production rate for one or more wells and one or more down hole production/injection control devices.

### SUMMARY

In carrying out the principles of the present invention, in accordance with an embodiment thereof, a method is provided which solves the above problem in the art.

In one aspect of the present inventions, a method is provided wherein a neural network is trained so that it models the performance of a well system. Data sets including known values for influencing parameters and known values for parameters indicative of the well system's performance in response to the influencing parameters are used to train the neural network. After training, the neural network may be used to predict how the well system's performance will be affected by changes in any of the influencing parameters.

The trained neural network is used along with a reservoir model and a financial model to yield a net present value. Prospective influencing parameters may then be input to the neural network, so that the affects of these parameters on the net present value may be determined. In addition, optimisation techniques may be utilised to determine how the influencing parameters might be set up to produce a maximum net present value.

Thus, in accordance with the present invention, there is provided a method of optimising performance of a well system in accordance with claim 1. In another aspect, the present invention provides a method of optimising performance of a well system in accordance with claim 7. Further features of the invention are defiled in the dependent claims.

These and other features, advantages, benefits and objects of the present invention will become apparent to one of ordinary skill in the art upon careful-consideration of the detailed description of representative embodiments of the invention hereinbelow and the accompanying drawings.

### BRIEF DESCRIPTION OF THE DRAWINGS

FIG. 1 is a schematic partially cross-sectional view of a method embodying principles of the present invention;
FIG. 2 depicts a data accumulation step of the method;
FIG. 3 depicts a neural network training step of the method;
FIG. 4 depicts an optimizing step of the method; and
FIG. 5 depicts another method embodying principles of the present invention.

### DETAILED DESCRIPTION

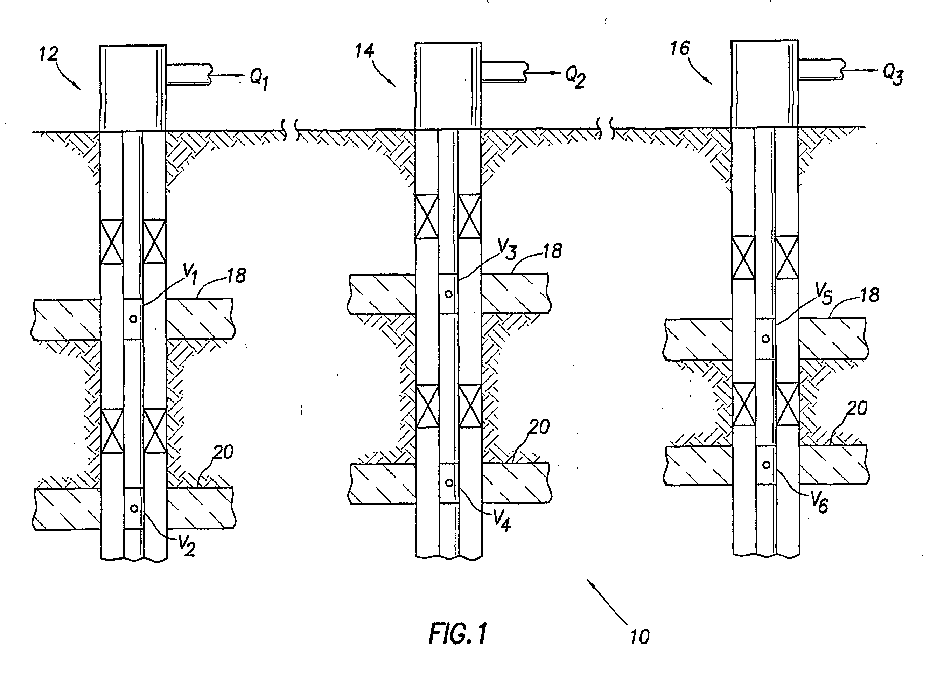

Representatively illustrated in FIG. 1 is a method 10 which embodies principles of the present invention. In the following description of the method 10 and other apparatus and methods described herein, directional terms, such as "above", "below", "upper", "lower", etc., are used only for convenience in referring to the accompanying drawings. Additionally, it is to be understood that the various embodiments of the present invention described herein may be utilized in various orientations, such as inclined, inverted, horizontal, vertical, etc., and in various configurations, without departing from the principles of the present invention.

The method 10 is described herein as being used in conjunction with a well system including production wells 12,14, 16 as depicted in FIG. 1. However, it is to be clearly understood that the method 10 is merely an example of a wide variety of methods which may incorporate principles of the present invention. Other examples include methods wherein the well system includes a greater or fewer number of wells, the well system includes one or more injection wells, the well system drains a greater or fewer number of reservoirs, the well system includes wells which produce from, or inject into, a greater or fewer number of zones, etc. Thus, the principles of the present invention may be used in methods wherein the well system is merely one well draining a single reservoir via one zone intersected by the well, and in methods wherein a large number of wells are used to drain multiple reservoirs and water flood or steam injection, etc., is used to enhance production.

As depicted in FIG. 1, each of the wells 12, 14, 16 intersects two reservoirs 18, 20. Two production valves or chokes are used in each well to regulate production from the individual reservoirs, that is, well 12 includes valves V₁ and V₂ to regulate production from reservoirs 18, 20, respectively, well 14 includes valves V₃, V₄ to regulate production from reservoirs 18, 20, respectively, and well 16 includes valves V₅, V6 to regulate production from reservoirs 18, 20, respectively.

An output of well 12 is designated Q₁, an output of well 14 is designated Q₂, and an output of well 16 is designated Q₃ in FIG. 1. These outputs Q₁, Q₂, Q₃ include parameters such as production rate of oil, production rate of gas, production rate of water, oil quality, gas quality, etc. These parameters are indicative of the output of each well. Of course, other parameters, and greater or fewer numbers of parameters, may be used to indicate a well's output in methods embodying principles of the present invention. In addition, it should be understood that, as used herein, the term "well output" is used to indicate performance of a well and may be used to describe the performance of an injection well, as well as the performance of a production well. For example, the "output" of an injection well may be indicated by parameters such as injection rate, steam temperature, etc.

It will be readily appreciated that the outputs Q₁, Q₂, Q₃ may be changed by varying the positions of the valves V₁, V₂, V₃, V₄, V₅, V6. For example, by decreasing the flow area through the valve V1, production from the reservoir 18 in the well 12 may be decreased, and by increasing the flow area through the valve V2, production from the reservoir 20 in the well 12 may be increased.

However, since production from the reservoir 18 in any of the wells 12,14, 16 influences production from the reservoir 18 in the other wells, production from the reservoir 20 influences production from the reservoir 20 in the other wells, and production from either of the reservoirs may influence production from the other reservoir, the outputs Q₁, Q₂, Q₃ of the wells are interrelated in a very complex manner. In addition, production rates from each of the reservoirs 18, 20 should be maintained within prescribed limits to prevent damage to the reservoirs, while ensuring efficient and economical operation of the wells 12, 14, 16.

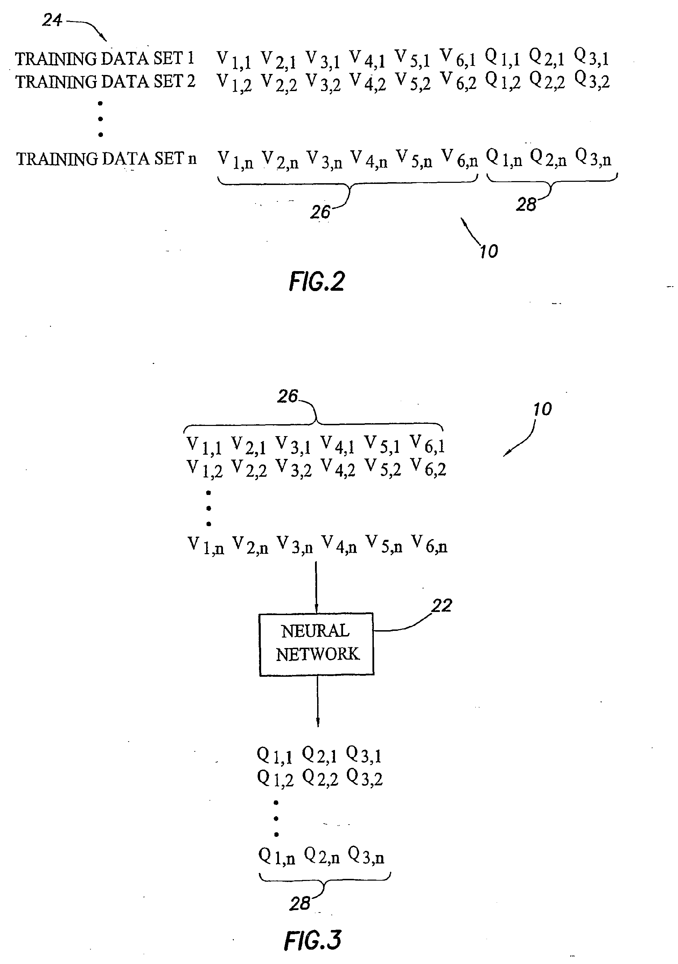

In the method 10, data is accumulated to facilitate training of a neural network 22 (see FIG. 3), so that the neural network may be used to predict the well outputs Q₁, Q₂, Q₃ in response to parameters influencing those outputs. The data is representatively illustrated in FIG. 2 as multiple data sets 24. The data sets 24 include parameters 26 influencing the outputs of the individual wells 12, 14, 16 and parameters 28 indicative of the well outputs Q₁, Q₂, Q₃. In the simplified example depicted in FIG. 2, the influencing parameters 26 are positions of the valves V₁, V₂, V₃, V₄, V₅, V6 at n instances. Thus, data set 1 includes a position V_{1,1} of valve V₁, position V_{2,1} of valve V_{2,} position V_{3,1} of valve V₃, etc. The indicative parameters 28 include production rates from the wells 12,14, 16. Thus, data set 1 includes a production rate Q_{1,1} from well 12, a production rate Q_{2,1} from well 14 and a production rate Q_{3,1} from well 16.

It is to be clearly understood that the influencing parameters 26 and indicative parameters 28 used in the simplified example of data sets 24 depicted in FIG. 2 are merely examples of a wide variety of parameters which may be used to train neural networks in methods embodying principles of the present invention. For example, another influencing parameter could be steam injection rate, and another indicative parameter could be oil gravity or water production rate, etc. Therefore, it may be seen that any parameters which influence or indicate well output may be used in the data sets 24, without departing from the principles of the present invention.

The data sets 24 are accumulated from-actual instances recorded for the wells 12, 14, 16. The data sets 24 may be derived from historical data including the various instances, or the data sets may be accumulated by intentionally varying the influencing parameters 26 and recording the indicative parameters 28 which result from these variations.

Referring additionally now to FIG. 3, the neural network 22 is trained using the data sets 24. Specifically, the influencing parameters 26 are input to the neural network 22 to train the neural network to output the indicative parameters 28 in response thereto. Such training methods are well known to those skilled in the neural network art.

The neural network 22 may be any type of neural network, such as a perceptron network, Hopfield network, Kohonen network, etc. Furthermore, the training method used in the method 10 to train the network 22 may be any type of training method, such as a back propagation algorithm, the special algorithms used to train Hopfield and Kohonen networks, etc.

After the neural network 22 has been trained, it will output the indicative parameters 28 in response to input thereto of the influencing parameters 26. Thus, the neural network 22 becomes a model of the well system. At this point, prospective values for the influencing parameters may be input to the neural network 22 and, in response, the neural network will output resulting values for the indicative parameters. That is, the neural network 22 will predict how the well system will respond to chosen values for the influencing parameters. For example, in the method 10, the neural network 22 will predict the outputs Q₁, Q₂, Q₃ for the wells 12, 14, 16 in response to inputting prospective positions of the valves V₁, V₂, V₃, V₄, V₅, V₆ to the neural network.

The output of the neural network 22 may be very useful in optimizing the economic value of the reservoirs 18, 20 drained by the well system. As discussed above, production rates can influence the ultimate quantity and quality of hydrocarbons produced from a reservoir, and this affects the value of the reservoir, typically expressed in terms of "net present value" (NPV).

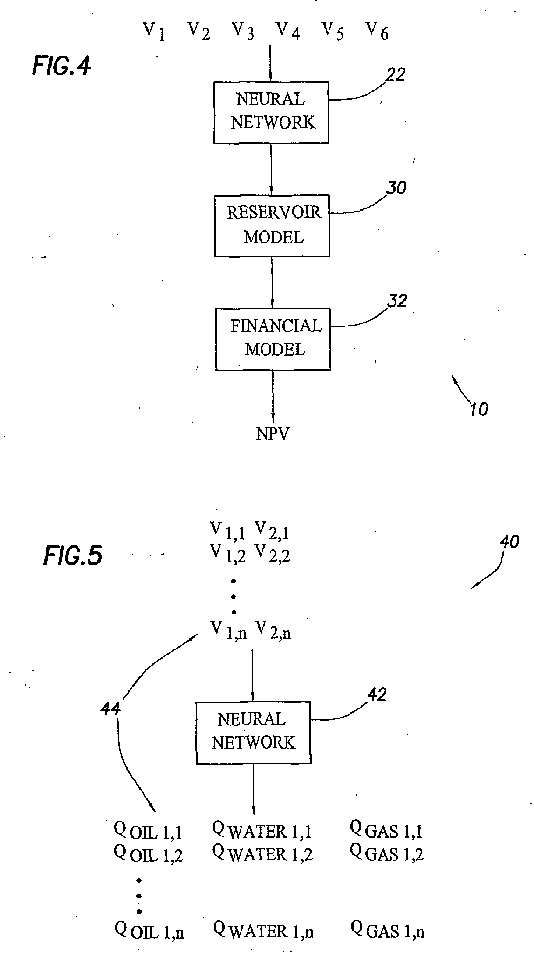

Referring additionally now to FIG. 4, the method 10 is depicted wherein the neural network 22, trained as described above and illustrated in FIG. 2, is used to evaluate the NPV of the reservoirs 18, 20. The neural network 22 output is input to a conventional geologic model 30 of the reservoirs 18, 20 drained by the well system. The reservoir model 30 is capable of predicting changes in the reservoirs 18, 20 due to changes in the well system as output by the neural network 22. An example of such a reservoir model is described in U.S. Patent Application-No. 09/357,426, entitled A SYSTEM AND METHOD FOR REAL TIME RESERVOIR MANAGEMENT.

The output of the reservoir model 30 is then input to a conventional financial model 32. The financial model 32 is capable of predicting an NPV based on the reservoir characteristics output by the reservoir model 30.

As shown in FIG. 4, prospective positions for the valves V₁, V₂, V₃, V₄, V₅, V6 are input to the trained neural network 22. The neural network 22 predicts outputs Q₁, Q₂, Q₃ of the well system, which are input to the reservoir model 30. The reservoir model 30 predicts the effects of these well outputs Q₁, Q₂, Q₃ on the reservoirs 18, 20. The financial model 32 receives the output of the reservoir model 30 and predicts an NPV. Thus, an operator of the well system can immediately predict how a prospective change in the positions of one or more production valves will affect the NPV.

In addition, using conventional numerical optimization techniques, the operator can use the combined neural network 22, reservoir model 30 and financial model 32 to obtain a maximum NPV. That is, the combined neural network 22, reservoir model 30 and financial model 32 may be used to determine the positions of the valves V₁, V₂, V₃, V₄, V₅, V6 which maximize the NPV.

Referring additionally now to FIG. 5, another method 40 embodying principles of the present invention is representatively illustrated. Rather than modeling the performance of a field including multiple wells, as in the method 10, the method 40 utilizes a neural network 42 to model the performance of a single well, such as the well 12 described above and depicted in FIG. 1.

In the method 40, the data sets 44 used to train the neural network include instances of positions of the valves V₁ and V₂, and resulting instances of production rates of oil (Qoil), production rates of water (Qwater) and production rates of gas (Qgas) from the well 12. As shown in FIG. 5, the valve positions are input to the neural network 42, and the neural network is trained to output the resulting production rates Qoil, Qwater, Qgas in response. Thus, the neural network 42 in the method 40 models the performance of the well 12 (a well system having a single well).

Similar to the method 10, the neural network 42 in the method 40 may be used to predict the performance of the well 12 in response to input to the neural network of prospective positions of the valves V₁, V₂ after the neural network is trained. An operator of the well 12 can, thus, predict how the performance of the well 12 will be affected by changes in the positions of the valves V₁, V₂. Use of a reservoir model and a financial model, as described above for the method 10, will also permit an operator to predict how the NPV will be affected by the changes in the positions of the valves V₁, V₂. Furthermore, numerical optimization techniques may be utilized to determine positions of the valves V₁, V₂ which maximize the NPV.

The method 40, thus, demonstrates that the principles of the present invention may be utilized for well systems of various configurations. Note, also, that neural networks may be trained in various manners, for example, to predict various parameters indicative of well system performance, in keeping with the principles of the present invention.

Of course, a person skilled in the art would, upon a careful consideration of the above description of representative embodiments of the invention, readily appreciate that many modifications, additions, substitutions, deletions, and other changes may be made to the specific embodiments, and such changes are contemplated by the principles of the present invention. Accordingly, the foregoing detailed description is to be clearly understood as being given by way of illustration and example only, the scope of the present invention being limited solely by the appended claims.

## Claims

1. A method (10, 40) of optimising performance of a well system, the method (10, 40) comprising the steps of:
accumulating multiple data sets (24, 44), each data set including at least one parameter (26) influencing an output of the well system, and at least one parameter (28) indicative of the well system output; and
training a neural network (22, 42) to model the output of the well system in response to the influencing parameters (26), said method **characterised by** the steps of
inputting an output of the trained neural network (22, 42) to a geologic model (30), and
inputting an output of the geologic model (30) to a financial model (32).

2. A method (10, 40) according to claim 1, wherein the training step further comprises training the neural network (22, 42) utilising the data sets (24, 44), the trained neural network (22, 42) outputting the indicative parameters (28) in response to input of the respective influencing parameters (26) to the neural network (22, 42).

3. A method (10, 40) according to claim 1, wherein in the accumulating step, the influencing parameters (26) include valve positions (V1, V2, V3, V4, V5, V6).

4. A method (10, 40) according to claim 1, wherein in the accumulating step, the indicative parameters (28) include production rates.

5. A method (10, 40) according to claim 1, further comprising the step of optimising an output of the financial model (32) in response to input of prospective influencing parameters to the neural network (22, 42).

6. A method (10, 40) according to claim 5, wherein the optimising step further comprises determining a respective value for each of the prospective influencing parameters wherein the output of the financial model (32) in response to input of the prospective influencing parameters to the neural network (22, 42) is optimised.

7. A method (10, 40) of optimising performance of a well system, the method (10, 40) comprising the steps of:
training a neural network (22, 42) to model an output of the well system in response to at least one variable parameter of the well system;
inputting an output of the neural network (22, 42) to at least one valuing model; and
optimising an output of the valuing model in response to the put of the well system parameter to the neural network (22, 42), said method **characterised in that**
the valuing model includes a geologic model (30) and a financial model (32), whereby the output of the neural network (22, 42) is input to the geologic model (30), and an output of the geologic model (30) is input to the financial model (32).

8. A method (10, 40) according to claim 7, wherein the training step further comprises inputting multiple data sets (24, 44) to the neural network (22, 42), each of the data sets (24, 44) including at least one known parameter (26) influencing the well system output.

9. A method (10, 40) according to claim 8, wherein in the training step, the known influencing parameter (26) is a position of a valve (V1, V2, V3, V4, V5, V6) in the well system.

10. A method (10, 40) according to claim 9, wherein the training step further comprises training the neural network (22, 42) to output at least one known parameter (28) indicative of the well system output in response to the input to the neural network (22, 42) of the known influencing parameter (26).

11. A method (10, 40) according to claim 10, wherein in the training step, the known indicative parameter (28) is a production rate in the well system.

12. A method (10, 40) according to claim 7, wherein in the optimising step, the well system parameter is varied to maximise the valuing model output.

## Patentansprüche

1. Verfahren (10, 40) zum Optimieren der Leistung eines Bohrlochsystems, wobei das Verfahren (10, 40) die folgenden Schritte umfasst:
Akkumulieren mehrerer Datensätze (24, 44), wobei jeder Datensatz mindestens einen Parameter (26), welcher eine Abgabemenge des Bohrlochsystems beeinflusst,
und einen Parameter (28), welcher indikativ für Abgabemenge des Bohrlochsystems ist, einschließt; und
Trainieren eines neuronalen Netzes (22, 42) zum Modellieren der Abgabemenge des Bohrlochsystems als Reaktion auf den Einflussparameter (26), das Verfahren **gekennzeichnet durch** die folgenden Schritte:
Eingeben einer Ausgabe des trainierten neuronalen Netzes (22, 42) in ein geologisches Modell (30), und
Eingeben einer Ausgabe des geologischen Modells (30) in ein Finanzmodell (32).

2. Verfahren (10, 40) nach Anspruch 1, wobei der Schritt des Trainierens weiterhin ein Trainieren des neuronalen Netzes (22, 42) zur Nutzung der Datensätze (24, 44) umfasst, und das trainierte neuronale Netz (22, 42) die Indikationsparameter (28) als Reaktion auf eine Eingabe der entsprechenden Einflussparameter (26) in das neuronale Netz (22, 42) ausgibt.

3. Verfahren (10, 40) nach Anspruch 1, wobei in dem Schritt des Akkumulierens die Einflussparameter (26) Ventilpositionen (V1, V2, V3, V4, V5, V6) einschließen.

4. Verfahren (10, 40) nach Anspruch 1, wobei in dem Schritt des Akkumulierens die Indikationsparameter (28) Förderraten einschließen.

5. Verfahren (10, 40) nach Anspruch 1, weiterhin enthaltend den Schritt eines Optimierens einer Ausgabe des Finanzmodells (32) als Reaktion auf eine Eingabe voraussichtlicher Einflussparameter in das neuronale Netz (22, 42).

6. Verfahren (10, 40) nach Anspruch 5, wobei der Optimierungsschritt weiterhin ein Bestimmen eines entsprechenden Werts für jeden der voraussichtlichen Einflussparameter umfasst, wobei die Ausgabe des Finanzmodells (32) als Reaktion auf die Eingabe der voraussichtlichen Einflussparameter in das neuronale Netz (22, 42) optimiert wird.

7. Verfahren (10, 40) zur Optimierung der Leistung eines Bohrlochsystems, wobei das Verfahren (10, 40) die folgenden Schritte umfasst:
Trainieren eines neuronalen Netzes (22, 42) zum Modellieren einer Abgabemenge des Bohrlochsystems als Reaktion auf mindestens einen variablen Parameter des Bohrlochsystems,
Eingeben einer Ausgabe des neuronalen Netzes (22, 42) in mindestens ein Bewertungsmodell, und
Optimieren einer Ausgabe des Bewertungsmodells als Reaktion auf die Eingabe des Bohrlochsystemparameters in das neuronale Netzwerk (22, 42), das Verfahren **dadurch gekennzeichnet, dass** das Bewertungsmodell ein geologisches Modell (30) und ein Finanzmodell (32) einschließt, wobei die Ausgabe des neuronalen Netzes (22, 42) in das geologische Modell (30) eingegeben wird, und eine Ausgabe des geologischen Modells (30) in das Finanzmodell (32) eingegeben wird.

8. Verfahren (10, 40) nach Anspruch 7, wobei der Schritt des Trainierens weiterhin ein Eingeben von mehreren Datensätzen (24, 44) in das neuronale Netz (22, 42) umfasst, wobei jeder der Datensätze (24, 44) mindestens einen bekannten Parameter (26) einschließt, welcher die Abgabemenge des Bohrlochsystems beeinflusst.

9. Verfahren (10, 40) nach Anspruch 8, wobei der bekannten Einflussparameter (26) in dem Schritt des Trainierens eine Position eines Ventils (V1, V2, V3, V4, V5, V6) in dem Bohrlochsystem ist.

10. Verfahren (10, 40) nach Anspruch 9, wobei der Schritt des Trainierens weiterhin ein Trainieren des neuronalen Netzes (22, 42) zur Ausgabe mindestens eines bekannten Parameters (28), welcher indikativ für die Abgabemenge des Bohrlochsystems ist, als Reaktion auf die Eingabe des bekannten Einflussparameters (26) in das neuronale Netz (22, 42) umfasst.

11. Verfahren (10, 40) nach Anspruch 10, wobei in dem Schritt des Trainierens der bekannte Indikatorparameter (28) eine Förderrate in dem Bohrlochsystem ist.

12. Verfahren (10, 40) nach Anspruch 7, wobei in dem Optimierungsschritt der Bohrlochsystemparameter zur Maximierung der Ausgabe des Bewertungsmodells variiert wird.

## Revendications

1. Procédé (10, 40) d'optimisation des performances d'un système de puits, le procédé (10, 40) comprenant les étapes consistant à :
accumuler de multiples jeux de données (24, 44), chaque jeu de données comprenant au moins un paramètre (26) influençant une sortie du système de puits, et au moins un paramètre (28) indicatif de la sortie de système de puits ; et
réaliser un apprentissage d'un réseau neuronal (22, 42) pour modéliser la sortie du système de puits en réponse aux paramètres d'influence (26), ledit procédé étant **caractérisé par** les étapes consistant à :
entrer une sortie du réseau neuronal ayant subi un apprentissage (22, 42) dans un modèle géologique (30), et
entrer une sortie du modèle géologique (30) dans un modèle financier (32).

2. Procédé (10, 40) selon la revendication 1, dans lequel l'étape consistant à réaliser un apprentissage comprend en outre l'étape consistant à réaliser un apprentissage du réseau neuronal (22, 42) en utilisant les jeux de données (24, 44), le réseau neuronal ayant subi un apprentissage (22, 42) envoyant les paramètres indicatifs (28) en réponse à une entrée des paramètres d'influence respectifs (26) au réseau neuronal (22, 42).

3. Procédé (10, 40) selon la revendication 1, dans lequel, dans l'étape consistant à accumuler, les paramètres d'influence (26) comprennent des positions de vanne (V1, V2, V3, V4, V5, V6).

4. Procédé (10, 40) selon la revendication 1, dans lequel, dans l'étape consistant à accumuler, les paramètres indicatifs (28) comprennent des taux de production.

5. Procédé (10, 40) selon la revendication 1, comprenant en outre l'étape consistant à optimiser une sortie du modèle financier (32) en réponse à une entrée de paramètres d'influence potentiels dans le réseau neuronal (22, 42).

6. Procédé (10, 40) selon la revendication 5, dans lequel l'étape consistant à optimiser comprend en outre l'étape consistant à déterminer une valeur respective pour chacun des paramètres d'influence potentiels, dans lequel la sortie du modèle financier (32) en réponse à une entrée des paramètres d'influence potentiels dans le réseau neuronal (22, 42) est optimisée.

7. Procédé (10, 40) d'optimisation des performances d'un système de puits, le procédé (10, 40) comprenant les étapes consistant à
réaliser un apprentissage d'un réseau neuronal (22, 42) pour modéliser une sortie du système de puits en réponse à au moins un paramètre variable du système de puits ; entrer une sortie du réseau neuronal (22, 42) dans au moins un modèle de valorisation ; et
optimiser une sortie du modèle de valorisation en réponse à l'entrée du paramètre de système de puits dans le réseau neuronal (22, 42), ledit procédé étant **caractérisé en ce que**
le modèle de valorisation comprend un modèle géologique (30) et un modèle financier (32), moyennant quoi la sortie du réseau neuronal (22, 42) est entrée dans le modèle géologique (30), et une sortie du modèle géologique (30) est entrée dans le modèle financier (32).

8. Procédé (10, 40) selon la revendication 7, dans lequel l'étape consistant à réaliser un apprentissage comprend en outre l'étape consistant à entrer de multiples jeux de données (24, 44) dans le réseau neuronal (22, 42), chacun des jeux de données (24, 44) comprenant au moins un paramètre connu (26) influençant la sortie de système de puits.

9. Procédé (10, 40) selon la revendication 8, dans lequel, dans l'étape consistant à réaliser un apprentissage, le paramètre d'influence connu (26) est une position d'une vanne (V1, V2, V3, V4, V5, V6) dans le système de puits.

10. Procédé (10, 40) selon la revendication 9, dans lequel l'étape consistant à réaliser un apprentissage comprend en outre l'étape consistant à réaliser un apprentissage du réseau neuronal (22, 42) pour produire au moins un paramètre connu (28) indicatif de la sortie de système de puits en réponse à l'entrée dans le réseau neuronal (22, 42) du paramètre d'influence connu (26).

11. Procédé (10, 40) selon la revendication 10, dans lequel, dans l'étape consistant à réaliser un apprentissage, le paramètre indicatif connu (28) est un taux de production dans le système de puits.

12. Procédé (10, 40) selon la revendication 7, dans lequel, dans l'étape consistant à optimiser, le paramètre de système de puits est varié pour maximiser la sortie de modèle de valorisation.
